# EUROPEAN PATENT APPLICATION

(11) **EP 4 810 835 A1**
(43) Date of publication of application: **23.09.2026**
(21) Application number: 26165323.2
(22) Date of filing: 17.03.2026
(51) Int. Cl.: F16K 5/06, F16K 5/20, F16K 27/12, F16K 51/02, F16K 27/06

(54) **ULTRA HIGH VACUUM VALVE**

(30) Priority: 17.03.2025 IT 202500005379
(71) Applicant: Buti Holding S.r.l., 24069 Cenate Sotto (BG) (IT)
(72) Inventor: LECCHI, Stefano, I-24060 Bolgare (BG) (IT); PATELLI, Nicola, I-24060 Gorlago (BG) (IT)
(74) Representative: De Bortoli, Tiziano

(57) **Abstract**

The present invention relates to a vacuum-tight valve (1), in particular for high vacuum applications. The valve comprises a valve body (2) which includes a first head (21) and a second head (22) opposite each other, wherein said valve body (2) defines an inner cavity (200) which extends between said heads (21, 22), where each head (21, 22) comprises a respective opening (221). The valve further comprises a closure member assembly (3) housed in the valve body (2), where such an assembly comprises a closure member (31) and a sealing seat (32). Said closure member (31) can be rotated around a rotation axis (105) with respect to the valve body (2) between an opening position, for which the openings of the two heads (21, 22) are communicating, and a closing position, in which said closure member (31) cooperates in a sealing manner with said sealing seat (32), preventing communication between said openings. According to the invention, the valve is provided with two bellows members (51, 52) arranged inside said cavity (200) so as to define an annular chamber coaxial to a reference axis (101) identified by the opening (211) defined through the first head (21), wherein for each of said bellows members (51, 52), a first end is connected to the first head (21) and a second end is connected to the sealing seat (32), wherein the pressure inside said annular chamber is adjustable to cause a movement of the sealing seat (32) along a direction parallel to said first reference axis (101). The valve according to the invention further comprises a guiding assembly arranged inside said cavity (200) and operatively connected to the sealing seat (32) to guide said movement along said direction parallel to said reference axis (101).

## Description

### FIELD OF THE INVENTION

The present invention relates in general to the manufacture of valves, particularly to the technical field of valves for vacuum applications. In particular, the invention relates to a ball valve to be used preferably, but not exclusively, for high-vacuum applications.

### STATE OF THE ART

The use of vacuum valves is widely known in various fields. This type of valve is very often used, for example, in the production of semiconductors or even in the production of equipment and/or systems for scientific experiments. Typically, a vacuum-tight valve is operatively interposed between two pipes, each of which is connected to an environment/space for which a vacuum condition is created. A vacuum-tight valve assumes at least one open configuration and at least one closed configuration. Due to the open configuration, the two pipes connected to the valve are communicating. In this condition, the vacuum can be obtained and maintained in both pipes which in effect form a single environment. When the valve assumes the closed configuration, the two pipes connected thereto are no longer communicating, that is, two environments separated by the valve itself are defined. In this condition, the vacuum condition is maintained for one of the two environments, while for the other environment this condition may not be maintained, i.e., it is also possible to operate under positive pressure conditions.

In most cases, a vacuum-tight valve is configured as a gate valve, comprising a hollow body within which a closure member is housed which slides along a predetermined direction between a closing position and an opening position. Examples of these types of valves are described and shown for example in WO2022084172 and US2002056819.

Although relatively effective, these gate valves have a relatively considerable overall size which makes their use difficult in certain applications where there are spatial/design constraints *(for example the presence of a wall, or another device in a position near that intended for the valve).* In this regard, the Applicant has noted that the gate configuration of the valve itself constitutes a design constraint for defining the layout of the system in which the valve is intended to operate.

### SUMMARY

In light of the above, the object of the present invention is to provide a high vacuum-tight valve which allows the above-mentioned drawbacks to be overcome or at least mitigated. Within the scope of this task, a first object of the present invention is to provide a vacuum-tight valve that has a limited overall size and is therefore easier to use with respect to a traditional gate valve. Another task, related to the previous one, is to provide a vacuum-tight valve with a different operating principle than that envisaged for a traditional gate valve.

Still another object of the present invention is to provide a vacuum-tight valve which consists of a relatively small number of pieces that can be easily assembled together.

Not least an object of the present invention is to provide a vacuum-tight valve which is reliable and easy to manufacture at competitive costs.

According to the invention, the above-mentioned task and objects are achieved by means of a ball valve having the characteristics set forth in claim 1. In particular, the valve according to the invention comprises:
- a valve body that includes a first head, a second head opposite said first head, and a jacket extending between said heads, in which the valve body defines an inner cavity extending between the heads; the two heads comprise a first opening and a second opening, respectively, in which, in use, the first opening makes the inner cavity communicating with a first environment and the second opening makes the inner cavity communicating with a second environment, wherein said opening of said first head identifies a first reference axis;
- a closure member assembly housed in the valve body and comprising a closure member and a sealing seat, wherein the closure member is rotatable around a rotation axis with respect to the valve body between an opening position, for which the openings are communicating each other, and a closing position wherein said closure body cooperates sealingly with the sealing seat, preventing communication between the openings;
- a first bellows member and a second bellows member arranged inside the cavity so as to define an annular chamber coaxial to the first reference axis, in which for each of said bellows members, a first end is connected to the first head and a second end is connected to the sealing seat, in which the pressure inside the annular chamber is adjustable to cause a movement of the sealing seat;
- a guiding assembly arranged inside the cavity and operatively connected to the sealing seat to guide the movement thereof along a direction parallel to said first reference axis, wherein said guiding assembly is distinct from said valve body and is radially arranged between the sealing seat and the valve body.

Advantageously, the closure member of the valve moves between the closed and opening positions through a rotation in a similar manner to what is envisaged for a ball valve. All other conditions being equal, this allows the overall size of the valve to be contained with respect to a traditional gate valve. The use of bellows members and the adjustable pressure annular chamber configured by them allows the required sealing conditions to be achieved. In fact, when the closure member is in the closing position, an increase in pressure in the annular chamber advantageously translates into a thrust of the sealing seat against the closure member surface and therefore into an increase in the degree of sealing. Advantageously, the guiding assembly keeps the sealing seat coaxial with the reference axis configured with the first opening of the head, i.e., coaxial with the bellows members. These emerge from the first head cantilevered inside the cavity. Therefore, by acting on the sealing seat, the guiding assembly helps to keep such bellows members in the position coaxial with the reference axis.

In accordance with a preferred embodiment, the jacket is cylindrical and extends longitudinally between the heads around a second reference axis parallel to said first reference axis.

In accordance with a possible embodiment, the rotation axis of the closure member is orthogonal to the first reference axis.

In accordance with a possible embodiment, the first reference axis is arranged in an eccentric position with respect to the second reference axis, where such an eccentric position is evaluated on a direction orthogonal to the rotation axis of the closure member.

In accordance with a possible embodiment, the valve comprises a pressure adjustment unit arranged outside the valve body and pneumatically connected with the annular chamber to adjust the internal pressure thereof.

In accordance with a possible embodiment, the valve comprises a stem rigidly connected to the closure member and at least partially projecting out of the valve body, wherein said valve also comprises an activation unit outside the valve body and operatively connected to the stem to cause the rotation thereof around said rotation axis.

In accordance with a possible embodiment, the valve comprises a magnetic fluid seal associated with the stem for providing vacuum tightness in the position at which the stem projects out of the valve body.

In accordance with a possible embodiment, the valve comprises a pair of support plates located inside the valve body in a diametrically opposite position with respect to the first reference axis, wherein said closure member is positioned between the plates and pivoted to each of them so as to rotate around said rotation axis.

In accordance with an embodiment, the closure member comprises at least one spherical sector portion which comprises a constant curvature surface intended to cooperate with the sealing seat when the closure member occupies the closing position.

In accordance with a possible embodiment thereof, the closure member comprises an open ring portion which includes an outer surface and an inner surface, in which a pair of pin portions extend from the outer surface in diametrically opposite positions and wherein said pin portions define said rotation axis, wherein said spherical sector portion extends from the open ring portion; said closure member comprising a pair of stiffening portions extending on opposite faces of the open ring portion thereby connecting the latter to said spherical sector portion.

In accordance with a possible embodiment, the sealing seat comprises a body having a ring-like shape, wherein the body carries at least one sealing ring, preferably made of polymeric material, adapted to abut against a contact surface of the closure member when the latter occupies the closing position.

In accordance with an embodiment thereof, the body of the sealing seat comprises:
- an inner cylindrical surface to which the second end of an innermost bellow member of said bellow members is connected and an outer cylindrical surface to which the second end of an outermost bellows member of said bellows members is connected;
- a first side facing the first head and a second side facing the second head.

In accordance with a possible embodiment, said at least one sealing ring of said sealing seat is arranged between an innermost cylindrical surface of the body of sealing seat and the second side of the body of the sealing seat.

In accordance with another possible embodiment, the sealing ring has a two-lobed circular shape and is arranged on said body of said sealing seat so that each of said lobes contacts said contact surface of the closure member at different diameters evaluated with respect to said first reference axis.

In accordance with another possible embodiment, the body of the sealing seat supports a pair of sealing rings having different diameters, in which said sealing rings *(preferably made of the same material or made of different materials)* are arranged in corresponding seats defined on the second side of the sealing seat facing toward said second head, wherein each sealing ring is configured to contact said contact surface of the closure member when this occupies the closing position.

Preferably, when the sealing seat is provided with two rings having different diameters, the valve comprises a suction assembly configured to reduce the pressure in a sealing space between the second side of said sealing seat, said seats of said sealing rings and said contact surface of said closure member.

In a possible embodiment thereof, said suction assembly comprises:
- a suction channel extending internally in the body of the sealing seat between said sealing space up to an outlet section near an outer surface of said body;
- a suction pipe outside said sealing seat body, where such a suction pipe extends in the annular space comprised between the outermost bellows member and said valve body jacket, in which said suction pipe communicates, at a first end thereof, with the outlet section of the suction channel;
- suction means connected to the suction pipe at a second end of the suction pipe outside the valve body.

This suction pipe comprises at least one section integral with the first head of the valve body and at least one bellows section defined between said section integral with the first head and the first end of the suction pipe.

In accordance with a possible embodiment thereof, the guiding assembly of the sealing seat comprises:
- a pair of pin elements fitted on the body of the sealing seat in diametrically opposite positions with respect to the first reference axis;
- a pair of guide elements integral with said valve body, wherein each guide element comprises a straight groove extending along a guide direction parallel to the first reference axis.

Each pin element comprises a first portion inserted in the groove of one of the two guide elements and a second portion resting on a surface of the same guide element so as to keep said sealing seat at a predetermined distance from said guide element.

In accordance with a preferred embodiment, each of said guide elements is defined by a part of one of the support plates to which the closure member is pivoted.

### LIST OF FIGURES

Further features and advantages of the invention will be better evident from the following detailed description of preferred embodiments of a valve according to the invention, given below by way of indicative and non-limiting purposes, with reference to the attached drawings, in which:
- Fig. 1 is a schematic perspective view of an embodiment of a valve according to the invention;
- Fig. 2 is an exploded perspective schematic view of the valve of Figure 1;
- Figs. 3 and 3A are schematic perspective views of a closure member of the valve of Figures 1 and 2;
- Fig. 4 is a sectional view of the valve of Figure 1 along a first longitudinal section plane, in which the valve is shown in an open configuration;
- Fig. 5 is a sectional view according to the section plane V-V of Figure 4;
- Fig. 6 is a sectional view of the valve of Figure 1 along said first longitudinal section plane, in which the valve is shown in a closed configuration;
- Fig. 7 is a sectional view of the valve of Figure 1 along the section plane VII-VII of Figure 6;
- Figs. 8 and 9 are an enlargement of detail A in Fig. 5 and detail B of Fig. 7, respectively;
- Figs. 10A to 10D are detailed views related to possible embodiments of a sealing seat of a valve according to the present invention;
- Fig. 11A and 11B are schematic views related to an installation of a valve according to the invention in the open configuration and in the closed configuration, respectively;
- Fig. 12 is a schematic view related to a possible installation of a valve according to the invention.
- Fig. 13 is a sectional view of another valve according to the invention along a first longitudinal section plane, in which the valve is shown in the open configuration;
- Fig. 14 is a sectional view along the section plane XIV-XIV of Fig. 13;
- Fig. 15 is a sectional view of the valve of Figure 13 along said first longitudinal section plane, in which the valve is shown in a closed configuration;
- Fig. 16 is a sectional view of the valve of Figure 1 along the section plane XVI-XVI of Figure 15;
- Fig. 17 is an enlargement of detail XVII of Figure 16.

In the figures, the same references indicate the same parts or components.

### DETAILED DESCRIPTION

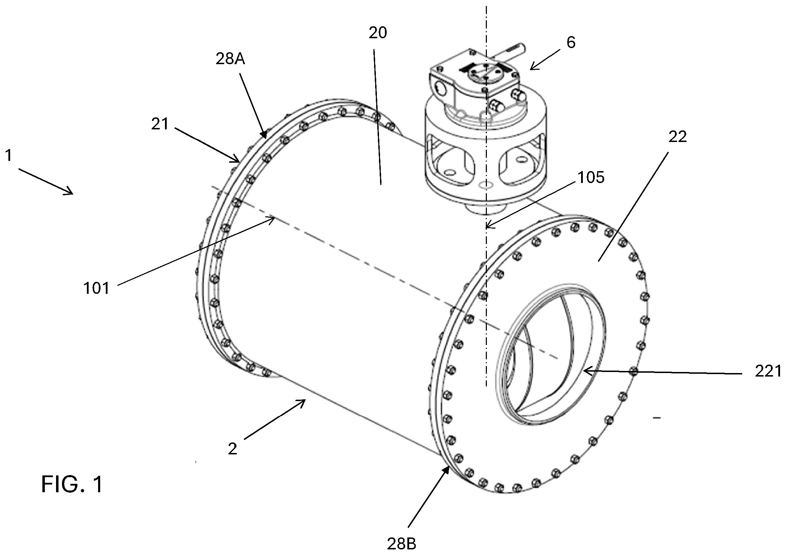

With reference to the aforementioned figures, the present invention therefore relates to a vacuum-tight valve, in particular also usable for high-vacuum *(or ultra-high vacuum)* sealing, in which the vacuum condition can reach values even lower than 10⁻¹² Pa. Figures 1 to 12 refer to a first embodiment of a valve 1 according to the invention, which comprises a valve body 2 defining an inner cavity 200. In particular, the valve body 2 comprises a jacket 20, axially delimited by a first head 21 and a second head 22 which are opposite and connected to said jacket 20 at opposite ends. The first head 21 comprises a first opening 211, preferably cylindrical, which identifies a first reference axis 101. The second head 22 comprises a second opening 221, preferably cylindrical, which is preferably arranged so as to be opposite the first opening 211, i.e., so as to have the same first reference axis 101.

In any case, in a use condition of the valve 1, the first opening 211 makes the inner cavity 200 communicating with a first environment, while said second opening 221 makes the inner cavity 200 communicating with a second environment. In the context of the present invention, the term *"environment"* is used generically to indicate a chamber, a pipe or another confined space in which it is intended to create a vacuum condition.

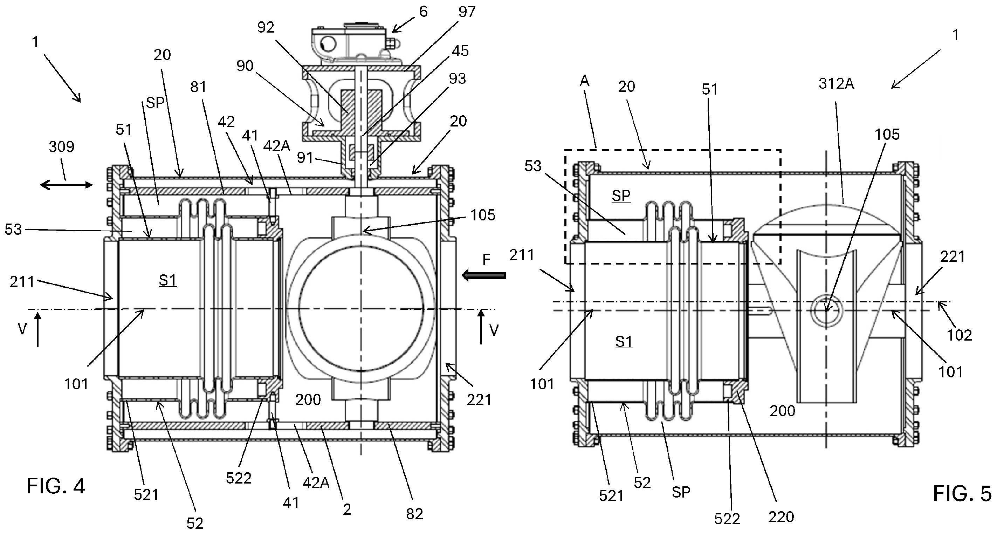

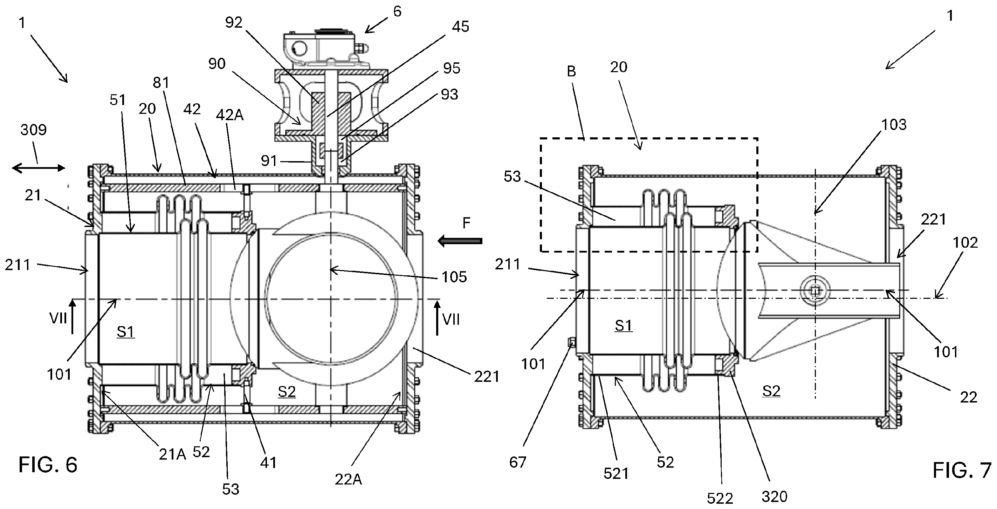

The valve 1 comprises a closure member assembly 3 comprising a closure member 31 and a sealing seat 32 *(hereinafter also referred to simply as seat 32).* As can be seen from the sectional views of Figures 4 to 7, the closure member assembly 3 is housed in the inner cavity 200 of the valve body 2. The closure member 31 is rotatable around a rotation axis 105 between an opening position *(shown in* *Figures 4 and 5**)* and a closing position visible in Figures 6 and 7. In particular, in the closing position the closure member 31 cooperates with the sealing seat 32 to prevent communication between the two environments, between which the valve 1 is operatively interposed. Instead, in the opening position, the closure member 31 does not interact with the sealing seat 32 and the two environments are communicating.

The valve 1 according to the invention comprises a pair of bellows-shaped cylindrical bodies *51, 52 (hereinafter also simply referred to as bellows 51,* 52) arranged in the inner cavity 200 in a mutually coaxial position. Such bellows-shaped cylindrical bodies 51, 52 are coaxial with the first reference axis 101 relative to said first opening 211 through the first head 21. In particular, the two bellows 51, 52 have different diameters so that an outermost bellows 52 *(with a larger diameter)* and an innermost bellows 51 *(with a smaller diameter)* can be identified. Between the two bellows 51, 52 an annular chamber 53 is defined which also extends coaxially to the first reference axis 101. The outermost bellows 52 is spaced from the jacket 20 of the body 2. More precisely, an annular space SP is defined between the outermost bellows 52 and the jacket 20 *(see* *Figures 4 and 5**).* Inside the innermost bellows 51, a free space S1 is defined, useful for the passage between the two indicated environments. In other words, there are no other bodies/components present inside the space S1.

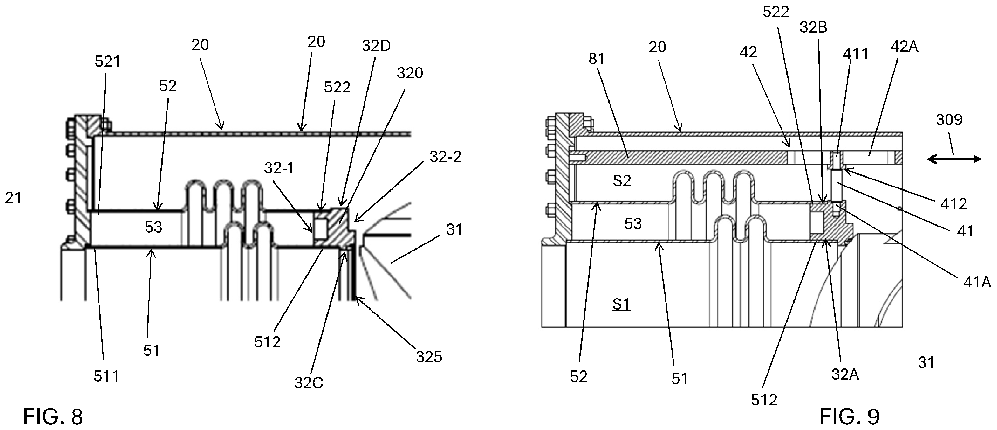

Preferably, the two bellows 51, 52 are made of metal material. In any case, each of the two bellows 51, 52 comprises a first end 511, 521 welded to the first head 21, particularly on an internal face 21A *(indicated in* *Figure 8**)* thereof *(i.e., the face facing the inner cavity 200).* For each bellows 51, 52, a second end 512, 522 is instead welded to the sealing seat 32 of the closure member assembly 3. In practice, the two bellows 51, 52 are connected to the first head 21 and support the seat 32 inside the cavity 200. The two bellows 51, 52 therefore emerge inside the cavity 200 substantially cantilevered from the first head 21. The annular chamber 53 is delimited axially on one side by the first head 21 and on the opposite side by the sealing seat 32.

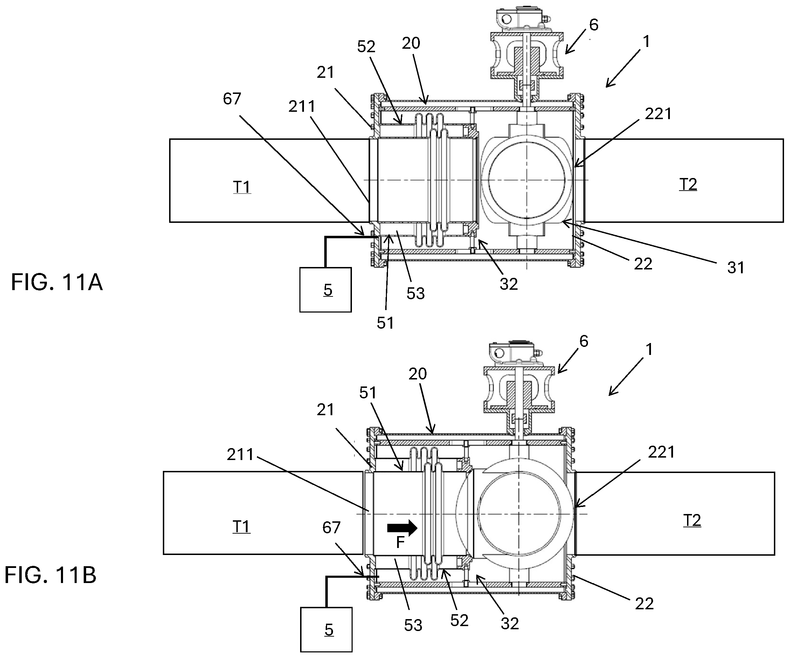

According to the invention, the pressure inside the annular chamber 53 is adjustable by means of a pressure adjustment unit 5 *(diagrammed in* *Figures 11A*, *11B*) arranged outside the annular chamber 53 and in general outside the valve body 2. The term adjustment unit 5 is used to generically indicate the set of means *(for example a pneumatic pump and*/*or pressure adjustment valves)* configured to cause an increase or reduction of pressure inside the annular chamber 53. In this regard, due to the shape of the bellows 51, 52, as the internal pressure P in the annular chamber 53 increases, the sealing seat 32 is subjected to a thrust in the direction of the second head 22, i.e., moving away from the first head 21. A subsequent decrease in pressure causes a thrust in the opposite direction, therefore approaching the first head 21. Therefore, following activation of the adjustment unit 5, the sealing seat 32 moves axially in the cavity 200.

In order to allow these movements, at least the outermost bellows 52 *(preferably both)* has an axial extension greater than 30% of the axial distance between the heads 21, 22 of the body 2. The term *"axial"* indicates that the quantities in question *(extension and distance)* are evaluated along a direction parallel to the first reference axis 101. In fact, in accordance with the present invention, the two bellows 51, 52 are designed to support and move the sealing seat 32 subjected to the thrust resulting from a pressure variation in the annular chamber 53. Preferably, the pressure adjustment unit 5 is pneumatically connected to the annular chamber 53 through a connector 67 connected to the head 21 precisely where the annular chamber 53 is located *(see* *Figures 11A*, *11B*).

According to the invention, the valve 1 further comprises a guiding assembly 41-42 of the seat 32, also housed inside the cavity 200 of the valve body 2. Such an assembly is designed to guide the seat 32 along a direction parallel to the first reference axis 101 when the same is subject to the movement caused by a pressure variation *(increase or decrease in pressure)* in the annular chamber 53. In particular, such an assembly is configured to guide the movement of the sealing seat 32 keeping it in a coaxial position with the first reference axis 101. In essence, the guiding assembly 41-42 keeps the seat 32 *"centred"* with respect to the first reference axis 101.

According to the invention, the guiding assembly 41-42 is distinct from the jacket 20, i.e., it comprises components arranged in the cavity 200 between the seat 32 and the jacket 20. Furthermore, the guiding assembly 41-42 is arranged in a position radially comprised between the sealing seat 32 and the jacket 20 *(see* *Figures 4* *and* *6**).* In other words, the guiding assembly 41-42 is arranged in an annular portion of the cavity 200 which is comprised between the sealing seat 32 and the jacket 20, where this annular part is observed with respect to an observation direction parallel to the first reference axis 101 *(indicated by the arrow F in* *Figures 4* *and* *6**).*

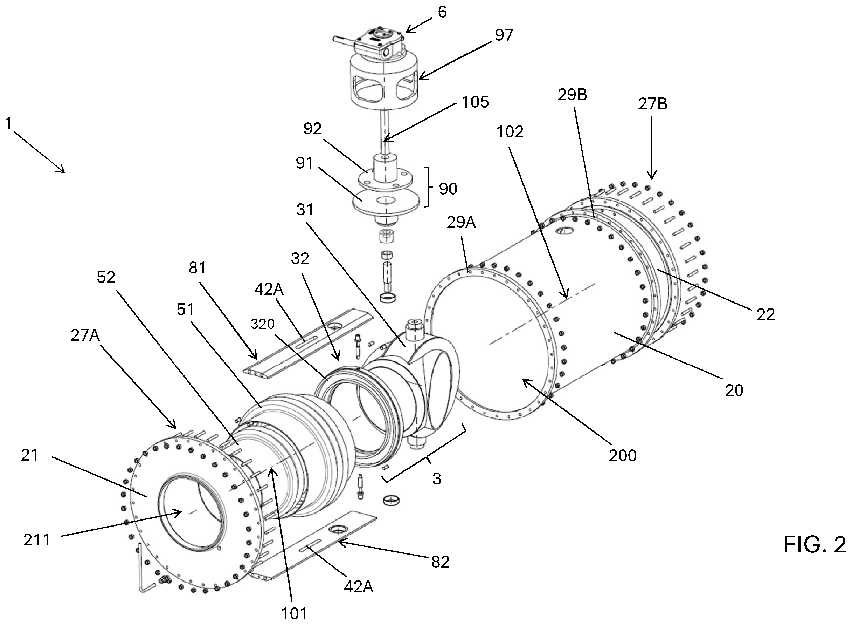

In accordance with a preferred embodiment visible in the figures, the two heads 21, 22 are connected to the jacket 20 through a respective flange connection 28A, 28B *(see* *Figure 1**).* For this purpose, the jacket 20 of the valve body 2 comprises a first radial edge 29A and a second radial edge 29B *(indicated in* *Figure 2**)* defined at opposite ends. For each flange connection 28A, 28B, relative screw connection elements 27A, 27B are provided *(also indicated in* *Figure 2**).*

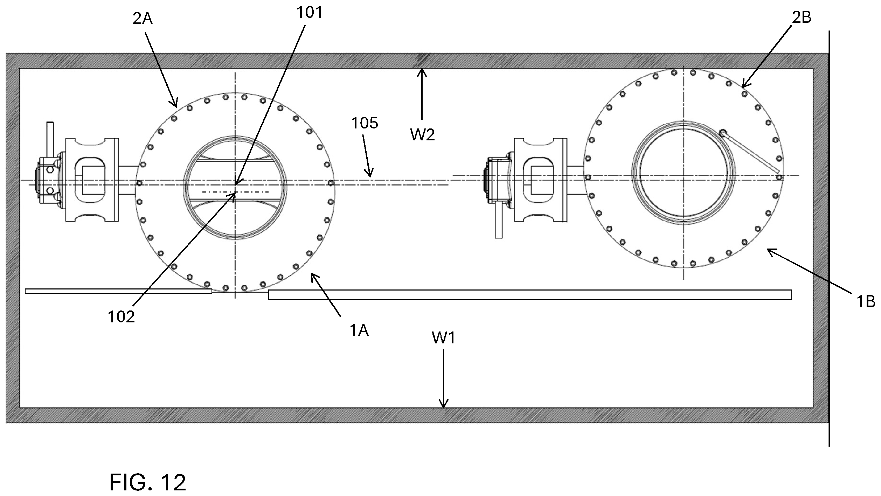

In accordance with an embodiment shown in the figures, the jacket 20 of the valve body 2 is cylindrical and extends around a second reference axis 102 which is parallel and spaced from the first reference axis 101 around which the two openings 211, 221 defined on the heads 21, 22 extend. In other words, with respect to the inner cavity 200 defined by the jacket 20, the first reference axis 101 occupies an eccentric position with respect to the second reference axis 102. As better clarified below commenting Figure 12, this solution advantageously increases the possible ways of using the valve 1 as it makes it more easily installable with respect to constraints present in the physical environment in which the valve is positioned *(for example a wall delimiting such an environment or a generic body arranged in the environment itself).*

In an alternative embodiment not shown in the figures, the second reference axis 102 around which the jacket 20 extends could coincide with the axis around which the two openings 211, 221 of the heads 21, 22 extend.

In accordance with a preferred embodiment shown in the figures, the two openings 211, 221 have a circular shape. Therefore, the valve 1 is intended to be connected to a circular end of a pipe delimiting, at least in part, one of the two environments separated by the valve itself.

In accordance with an embodiment shown in the figures, the rotation axis 105 of the closure member 31 is orthogonal and incident to the first reference axis 101. The valve 1 comprises a stem 45 *(indicated in* *Figures 4* *and* *6**)* rigidly connected to the closure member 31. The stem 45 exits outside the valve body 2, extending longitudinally along the rotation axis 105 of the closure member 31.

The valve 1 comprises an activation unit 6, outside the valve body 2, to rotate the stem 45, and consequently the closure member 31, around its rotation axis 105. In the embodiment shown schematically in the figures, the activation unit 6 is of the manual type and may also comprise a lever/handwheel *(or another functionally equivalent means)* not illustrated and which can be gripped by an operator. However, in an alternative embodiment *(not shown)* the activation unit 6 could comprise motorized means.

In accordance with a preferred embodiment, the valve 1 is provided with sealing means associated to the stem 45 at its exit from the valve body 2 to ensure the vacuum seal in the inner cavity 200. In the embodiment shown in the figures, the sealing means comprise a magnetic fluid seal 90 *(or ferro-fluidic seal 90 or seal 90)* having a shape known per se. Such a seal ensures the rotation of the stem 45 and at the same time the hermetic seal of the vacuum inside the inner cavity 200. With particular reference to Figure 6, the seal 90 is provided with a lower body 91 connected by welding to the jacket 20 of the valve body 2, where the lower body 91 is internally hollow and crossed by the stem 45. The lower body 91 defines a seat 95 *(which surrounds a portion of the stem 45)* in which the elements constituting the ferro-fluidic seal *(magnetic poles and magnetic fluid)* are positioned. The seal 90 comprises an upper body 92 connected to the lower body 91. The upper body 90 is also crossed by the stem 45 which exits above. In particular, the two bodies 91, 92 are mechanically flanged. The terms *"lower"* and *"upper"* referring to the two bodies 91, 92 are to be considered with respect to a substantially horizontal installation of the valve 1 *(i.e., a condition for which the axes 101 and 102 are horizontal).*

In the illustrated embodiment, a further cylindrical element 97 rests on the lower body 91, which surrounds the upper element 92 and defines a support surface for the activation unit 6 of the stem 45.

In accordance with an embodiment shown in the figures, the valve 1 comprises a pair of support plates 81, 82 *(made of metallic material)* arranged inside the valve body 2 in a diametrically opposite position with respect to the first reference axis 101. Such plates 81, 82 are physically distinct from the jacket 20 and supported inside the cavity 200 between the heads 21, 22. In practice, for each plate 81, 82, a first end is connected to the first head 21 and a second end is connected to the second head 22. The support plates 81, 82 have the function of supporting the closure member 31 inside the cavity 200 in the correct operating position. More precisely, the closure member 31 is pivoted to each of the plates 81,82 to rotate around the rotation axis 105 thereof. For this purpose, the closure member 31 is provided with a first pin end 31A and a second pin end 31B which together identify the rotation axis 105. The first pin end 31A is hinged to the first plate 81, while the second pin end 31B is hinged to the second plate 82.

In the possible embodiment shown in the figures, each of the plates 81, 82 has a substantially rectangular shape *(see* *Figure 2**)* and comprises opposite ends, each connected to one of the heads 21, 22, in particular to the internal face 21A, 22A thereof *(see* *Figure 6**).* Preferably, each end of the support plates 81, 82 is fixed to one of the heads 21, 22 by means of connection pins.

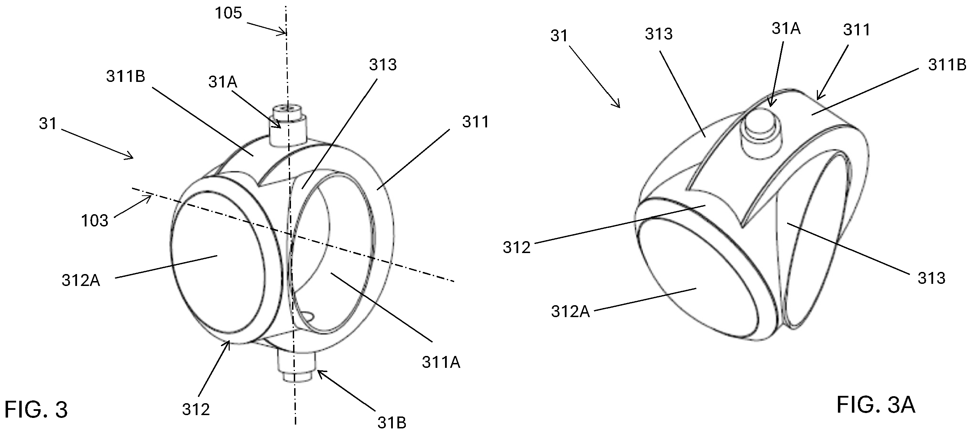

The closure member 31 is provided with a contact surface that cooperates with the seat 32 when the closure member 31 itself occupies the closing position. In accordance with a preferred embodiment visible in Figures 3 and 3A, the closure member 31 comprises a spherical sector portion 312 which includes a constant-curvature surface 312A which cooperates with the sealing seat 32 when the closure member 31 reaches the closing position *(see* *Figures 6, 7* *and* *9**).* Therefore, in this embodiment, the constant-curvature surface 312A represents the contact surface indicated above.

Still with reference to Figures 3 and 3A, preferably the closure member 31 comprises an open ring portion 311 in which an internal surface 311A and an outer surface 311B are identified. These are substantially coaxial with respect to a third reference axis 103 which is orthogonal to the rotation axis 105 of the closure member 31. In this regard, the two pin ends 31A, 31B defining the rotation axis 105 extend from the outer surface 311B in diametrically opposite positions *(see* *Figure 3**).* The spherical sector portion 312 extends from the open ring portion 311, on the side in which the ring shape is interrupted.

In the embodiment shown in the figures, the closure member 31 also comprises two stiffening portions 313 which extend on opposite faces of the open ring portion 311 connecting the latter to the spherical sector portion 312. Such stiffening portions 313 reinforce the structure of the closure member 31, increasing both the torsional and flexural strength thereof.

With reference to Figure 5, when the closure member 31 is in the opening position, the third reference axis 103 around which the open ring portion 311 extends becomes coincident with the first reference axis 101. Instead, in the closing position *(see* *Figure* 7) the third reference axis 103 and the first reference axis 101 become orthogonal.

In an alternative embodiment, the closure member 31 could also have a full sphere configuration and therefore the open ring portion and the reinforcing portions could be omitted. The embodiment shown in the figures is preferred, as it allows for a reduction in weight and therefore the quantity of material used.

In any case, the movement from the opening position to the closing position *(or vice versa)* of the closure member 31 preferably requires a 90° rotation around the rotation axis 105.

In a preferred embodiment thereof, the sealing seat 32 comprises a body 320 having a ring-like shape *(see* *Figure 2**)* which supports at least one sealing ring 325 *(indicated in* *Figure 8**)* preferably, but not exclusively, made of polymeric material. Such a sealing ring 325 contacts the contact surface *(with constant curvature 312A in the case illustrated)* of the closure member 31 when the latter occupies the closing position.

In a preferred embodiment thereof shown in the figures, the body 320 of the sealing seat 32 comprises an inner cylindrical surface 32A to which the second end 512 of the first bellows member 51 is welded and an outer cylindrical surface 32B to which the second end 522 of the second bellows member 52 is welded *(see* *Figure 9**).* For the purposes of the present invention, all the cylindrical surfaces of the body 320 of the sealing seat 32 are to be considered with respect to the first reference axis 101. Therefore, the inner cylindrical surface 32A of the sealing seat 32 has a smaller diameter than the outer cylindrical surface 32B.

The seat 32 comprises a first side 32-1 facing the first head 21 and a second side 32-2, opposite the first side 32-1, which remains facing the second head 22 *(see* *Figure 8**).* In the seat 32, an innermost cylindrical surface 32C is identified having a smaller diameter with respect to the inner cylindrical surface 32A defined above. The sealing ring 325 is positioned at a seat defined between the second side 32-2 of the sealing seat 32 and its innermost cylindrical surface 32C. The ring is intended to be compressed and deformed between the body 320 of the sealing seat 32 and the contact surface with constant curvature 312A of the closure member 31 when the latter occupies the closing position. In this regard, as indicated in Figures 6 and 7, when the closure member 31 occupies the closing position, two spaces S1, S2 can be distinguished inside the cavity 200 of the valve body, which are physically separate from *(i.e., not communicating)* each other. A first space S1 is inside the first bellows 51, axially delimited by the constant-curvature contact surface 512A of the closure member 31 and open at the first opening 211 of the valve body 2. The second space S2 is instead outside the second bellows 52 and open at the second opening 221.

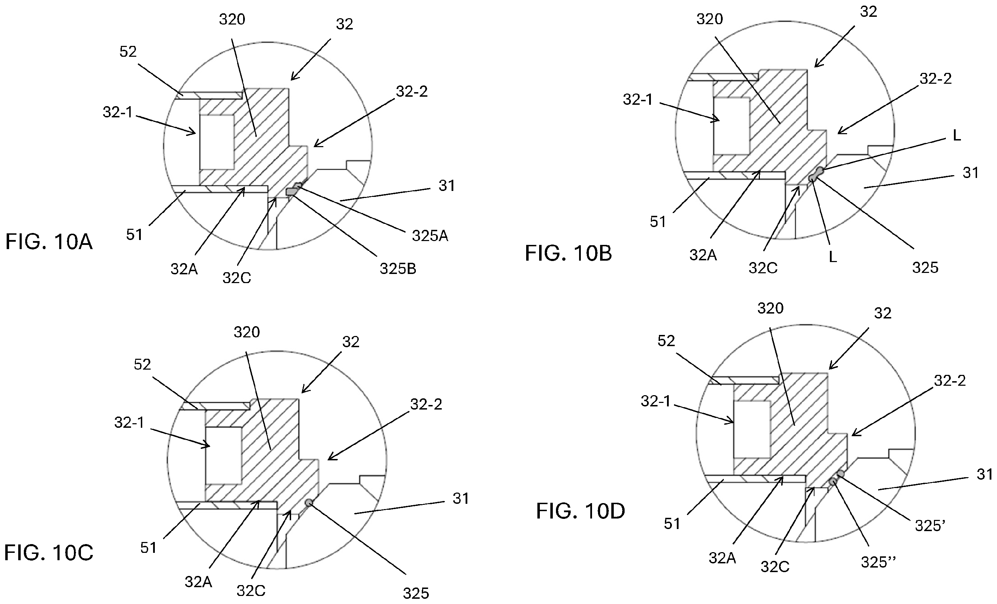

Figures 10A to 10D refer to possible embodiments of the seat 32 which differ substantially in relation to the shape and number of sealing rings provided on and supported by the sealing seat 32. In a possible embodiment, diagrammed in Figure 10A, the sealing seat 32 comprises two sealing rings 325A, 325B having different diameters and adjacent to each other, where each of them is positioned in a portion of a seat defined between the second side 32-2 and the innermost cylindrical surface 32C of the body 320. An outermost sealing ring 325A may be in the form of a rubber O-ring, while an innermost sealing ring 325B may be a plastic insert.

In another possible embodiment, diagrammed in Figure 10B, a single sealing ring 325 is provided, made of rubber and having a shape with two opposite circular lobes L. Such a sealing ring 325 is positioned in a corresponding seat defined between the first side 32-1 and the innermost cylindrical surface 32C of the body 320 so that the two lobes L come to be arranged at different diameters, evaluated with respect to the first reference axis 101. Thereby, the two lobes L contact the contact surface of the closure member 31 at different diameters when the closure member 31 itself occupies the closing position.

Figure 10C shows a further embodiment in which a single O-ring type sealing ring 325 made of rubber is provided. Such an embodiment is substantially similar to the one visible in Figures 8 and 9.

In accordance with a further embodiment shown schematically in Figure 10D, the sealing seat 32 includes two sealing rings 325', 325", having different diameters, arranged in spaced seats defined between the second side 32-2 and the innermost surface 32C of the body 320. Each of these seats has a diameter conforming to that of the sealing ring 325', 325" intended for the seat itself. Both sealing rings 325', 325" are intended to come into contact with the contact surface of the closure member 31 when the latter occupies the closing position. In particular, the two sealing rings 325', 325" can be positioned so as to act in series *(i.e., first one and then the other)* on the contact surface depending on the pressure conditions. In any case, the use of two sealing rings 325', 325" positioned on sealing diameters advantageously improves the ultra-vacuum seal, thus increasing the operating life of the valve.

Still with reference to Figure 10D, the two sealing rings 325', 325" can be made of the same material or alternatively of different materials. In a possible embodiment, for example, the sealing rings are both made of polymeric material *(e.g., rubber).* In another possible and alternative embodiment, a first sealing ring can be made of polymeric material, while a second sealing ring can be made of metallic material. In this regard, such a second ring can be made of metallic material, that is, it can be formed, for example, by an O-ring comprising a spring inside the structure of the ring itself. The internal spring gives elasticity to the metal sealing system during compression, always to maintain the ultra-vacuum seal over time. Always with reference to the embodiment diagrammed in Figure 10D, in a possible variant *(not shown in the figures),* between the two seats containing the two sealing rings 325', 325" on the body 320 of the sealing seat 32 a small-diameter suction hole *(in the order of a few millimetres)* could be obtained in an intermediate diametrical position *(always evaluated with respect to the first reference axis 101)* between those of the two seats. A suction pipe having a small diameter passing through the annular chamber 53 could be connected to such a suction hole and could in turn be connected to a vacuum pump positioned outside the valve body 2. Activating such a pump would increase the sealing effect, as it would allow any leaks between the two sealing rings 325', 325" to be isolated. Overall, the assembly formed by the suction hole, the suction pipe and the vacuum pump constitutes a suction assembly which advantageously increases the level of sealing that can be achieved.

According to an embodiment shown in the figures, the guiding assembly of the seat 32 comprises a pair of pin elements 41 fitted on the body 320 of the seat 32 in diametrically opposite positions with respect to the first reference axis 101 *(see* *Figure 4**).* Preferably, the two pin elements 41 are fitted, at a first end 41 A thereof *(see* *Figure 9**),* on the outermost cylindrical surface 32D *(indicated in* *Figure 8**)* of the seat 32, i.e., the one having the largest diameter. The guiding assembly also comprises a pair of guide elements 42 which are integral, directly or indirectly, with the jacket 20 of the valve body 2 *(see* *Figure 4**).* Each guide element 42 comprises a straight groove 42A which extends along a guide direction 309 parallel to the first reference axis 101.

Each pin element 41 comprises a first portion 411 inserted in a groove 42A of one of the two guide elements 42 and a second portion 412 which rests on the surface of the same guide element 42 *(see in particular* *Figure 9**).* The coupling between the first portion 411 and the relative guide 42 keeps the guide of the seat 32 parallel to the first reference axis 101. At the same time, the support of the second portion 412 against the surface of the guide element 42 keeps the seat 32 at a predetermined distance from the guide element itself. Overall, considering the two pin elements 41 arranged in a diametrically opposite position, the seat 32 remains equally spaced from the two guide elements 42, i.e., centred *(i.e., coaxial)* with the first reference axis 101.

In the embodiment shown in the figures, each guide element 42 is constituted by a part of one of the two plates 81, 82 to which the closure member 31 is hinged. In practice, the plates 81, 82 are not only used to rotatably support the closure member 31, but also advantageously to guide and keep the seat 32 centred on the first reference axis 101.

In the form shown in the figures, each guide element 42 is therefore integral with the valve body 2 indirectly through the corresponding support plate 81, 82. In an alternative embodiment *(not shown in the figures),* the guide elements 42 could be independent of the two plates 81, 82 and therefore integral/directly connected to one or both of the heads 21, 22 or to the jacket 20.

In another alternative embodiment *(also not illustrated),* the pin elements could be connected, directly or indirectly, to the jacket 20 of the valve body and the guide elements could be associated with the sealing seat.

In a further possible embodiment, the pin elements and consequently the guide elements could be more than two in number and operatively arranged in equidistant angular positions with respect to the first reference axis.

Figures 11A and 11B refer, schematically, to a possible application of a valve 1 according to the invention which is connected to a first pipe T1 at the first opening 211 defined through the first head 21 and to a second pipe T2 at the second opening 221 defined through the second head 221. In the condition shown in Figure 11A, the closure member 31 occupies the opening position. The two pipes T1 and T2 are communicating. Therefore, the possible vacuum condition can be reached and maintained for both pipes T1 and T2.

If maintenance is required on one of the two pipes or in any other case where one of the two pipes needs to be brought to atmospheric pressure or pressurized, while leaving the other in a vacuum condition, then the valve 1 must be brought to its closed configuration. To achieve such a condition *(shown in* *Figure 11B**),* the closure member 31 is rotated 90° until it reaches its closing position. In this condition, the two pipes T1, T2 are no longer communicating. Following the closing of the valve 1, the pressure generation means 5 are activated so as to cause an increase in pressure in the annular chamber 53 defined between the two bellows members 51, 52. In particular, the pressure is increased until it reaches a predetermined value. The increase in pressure results in a movement *(indicated by the arrow F in* *Figure 10B**)* of the seat 32 towards the closure member 31, i.e., in an increase in the seal between the same two components (31, 32). Such a movement causes a compression of the sealing ring 325 between the seat 32, on which it is mounted, and the constant-curvature surface 112A of the closure member. Such compression results in a deformation of the sealing ring 325 itself, which guarantees the seal and therefore the separation between the two pipes T1 and T2.

The subsequent reopening of the valve 1 is preceded by the intervention of the pressure adjustment means 5 which bring the pressure in the annular chamber 53 back to a value lower than that reached in the closed conditions *(this pressure could be, for example, atmospheric pressure or a lower pressure, or similar, as it could work up to an absolute pressure lower than 1 mbar).* The decrease in pressure in the annular chamber 53 causes, due to the shape of the two bellows members 51, 52, a retraction of the seat 32 towards the first head 21 so as to facilitate the rotation of the closure member 31 towards the opening position.

Figure 12 refers to a possible application of a first valve *(indicated with 1A)* and a second valve *(indicated with 1B)* according to the invention configured as in Figures 1 to 9. In particular, such Figure 12 allows us to observe the advantage deriving from the eccentric position of the first reference axis 101 with respect to the second reference axis 102, where such eccentricity is defined on a plane orthogonal to the rotation axis 105 of the closure member 31. It can be observed that, with the same configuration of the valves *1A, 1B* and with the same position assigned to the rotation axis 105 of the relative closure member, the valve body *(indicated with 2A)* of the first valve 1A is positioned differently with respect to the valve body *(indicated with 2B)* of the second valve 1B, where such positioning is evaluated with respect to two mutually opposite reference walls W1, W2. More precisely, the valve body 2A of the first valve 1A is rotated by 180° around an axis coinciding with the rotation axis 105 of the closure member 31 with respect to the valve body 2B of the second valve 1B. From Figure 12 it can be seen that the eccentricity indicated above is particularly advantageous in terms of installation, thus increasing the versatility of use of the valve.

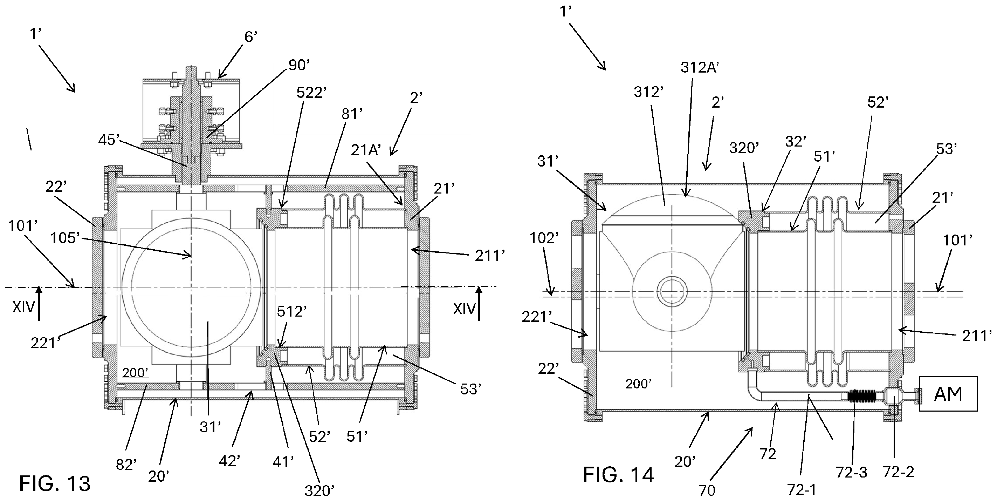

Figures 13 to 15 refer to a second possible embodiment of a valve according to the invention, generically indicated with the reference 1'. This valve 1' differs from the one *(indicated with reference numeral 1)* described in the commentary on Figures 1 to 9 mainly due to the presence of a suction assembly configured to reduce the pressure at the sealing rings 325', 325" installed on the seat 32' so as to increase the seal of the rings themselves on the contact surface of the closure member 31'.

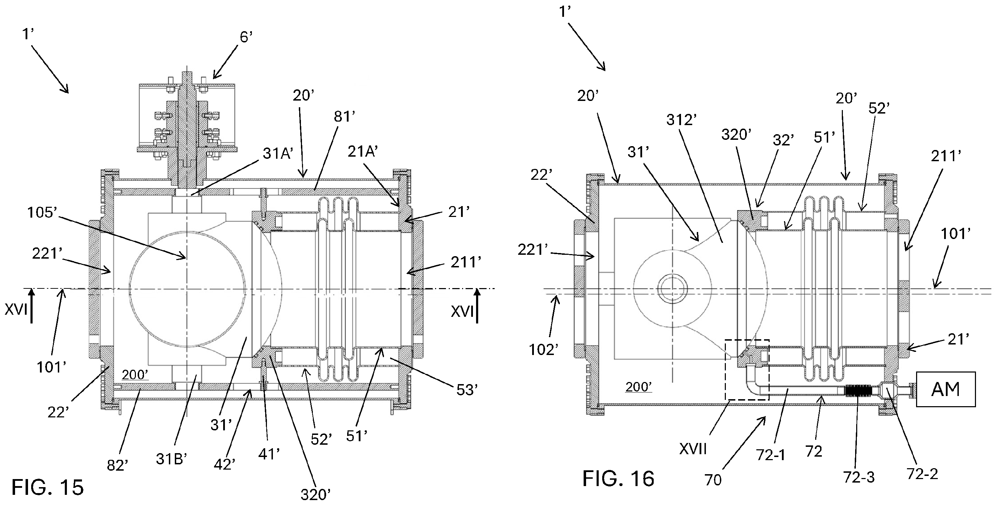

Figures 13 and 14 are sectional views of the valve 1' with the closure member 31' in the open configuration, while Figures 15 and 16 are views of the valve 1' with the closure member 31' in the closing position. The valve 1' is provided with two coaxial bellows cylindrical bodies 51', 52' which define an annular chamber 53'. Also in this case, the two bellows 51', 52' are connected *(welded),* at a first end thereof, to the internal face 21A' of the first head 21'e, at one of the second ends 512', 522' thereof, to the sealing seat 32' *(see* *Figure 13**).* Also in the valve 1', the internal pressure in the annular chamber 53' can be adjusted by means of an adjustment unit *(not shown in* *Figures 13 to 16**)* in a similar manner to that envisaged for the chamber 53 of the valve 1 of Figures 1 to 9.

In accordance with the principles of the invention, the valve 1' comprises a guiding assembly 41'- 42' of the sealing seat 32' which is physically distinct from the jacket 20' of the valve body 2'. Also in this case, the guiding assembly 41'- 42' is radially interposed between the jacket 20' and the sealing seat 32'. In general, the shape of the guiding assembly 41'- 42' and the bellows members 51', 52' corresponds to that of the corresponding components of the valve 1 of Figures 1 to 9. In this regard, please refer to what above.

Also for the valve 1', the closure member 31' is provided with a spherical sector portion 312' which includes a constant-curvature surface 312A' which cooperates with the sealing seat 32' when the closure member 31' itself occupies the closing position *(**Figures 14* *and* *16**).* Also in the valve 1', the closure member 31' is pivoted, at opposite pin ends 31A', 31B', to two support plates 81', 82' arranged in diametrically opposite positions inside the cavity 200' of valve body 2' and supported between the two heads 21', 22'.

With reference to Figure 13, the valve 1' also includes a stem 45' connected to the closure member 31' and which partially exits from the valve body 2', where an activation unit 6' is connected to such a stem 45', which causes the rotation of the stem 45' and therefore of the closure member 31'. The valve 1' also preferably comprises a magnetic fluid seal associated with the stem for the vacuum seal at the position in which the stem 45' exits from the valve body 1'. In general, the activation unit 6' and the magnetic fluid seal 90' can be of the same type already indicated above in the commentary of the valve 1 of Figures 1 to 9. In this regard, please refer to what has already been described above.

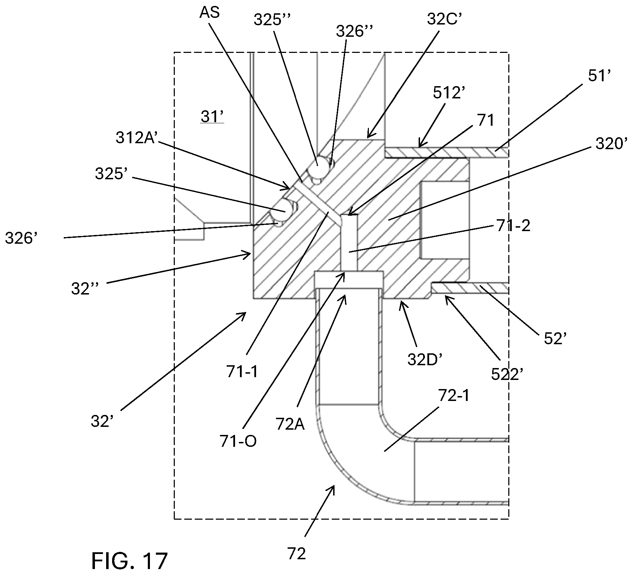

In the valve 1', the sealing seat 32' is provided with two rings 325', 325" having different diameters and therefore arranged in corresponding seats 326', 326" spaced from each other. With reference particularly to Figure 17, such seats 326', 326" are defined on the second side 32-2' of the seat 32' facing the closure member 31', i.e., the second head 22'. Both sealing rings 325', 325" are intended to contact with the constant-curvature surface 312A' of the closure member 31' when this occupies the closing position *(**Figures 13 and 14**).*

As anticipated above, the valve 1' comprises a suction assembly 70 configured to reduce the pressure, i.e., create a vacuum condition, in the sealing space AS comprised between the two seats 326', 326" of the sealing rings 325', 325" and the constant-curvature surface 312' of the closure member 31' *(see* *Figure 17**).* In particular, such a suction assembly 70 comprises a suction channel 71 which extends inside the body 320' of the sealing seat 32' between the sealing space AS defined above up to an outlet section 71-O near a surface of the body 320', preferably the outermost cylindrical surface 32D'. Preferably, such a suction channel 71 comprises a first section 71-1 with a smaller diameter *(in the order of a few millimetres)* which extends starting from the sealing space AS and a second section 71-2 with a larger diameter, communicating with said first section 71-1 and which extends between said first section 71-1 and said outlet section 71-0. It has been seen that the use of two sections with different diameters improves the suction effect, resulting in further advantages in terms of sealing.

The suction assembly 70 comprises a suction pipe 72 *(preferably made of metallic material)* outside the body 320' of the seat 32' and which extends in the annular space between the outermost bellows 52' and the jacket 20' of the valve body *(see* *Figures 14* *and* *16**).* The suction pipe 72 communicates, at a first end 72A thereof, with the outlet section 71-O of the suction channel 71 defined in the body 320' of the seat 32'. At a second end 72B thereof which is outside the valve body 2', the suction pipe 72 is connected to suction means AM *(vacuum pump)* which are outside the valve body 2. The activation of the suction means AM and the consequent reduction in pressure in the space AS defined above significantly increases the seal created by the two sealing rings 325', 325" and allows isolating any leaks that could occur between the rings themselves.

With reference again to Figures 14 to 16, the suction pipe 72 comprises a first section 72-1 which extends from the first end 72A and which is therefore connected to the body 320' of the seat 32'. A second section 72-2 of the suction pipe 72 is instead integral with the first head 21' and passes through it. Between the first section 72-1 and the second section 72-2, a third section 72-3 configured as a bellows is included. Advantageously, the third section 72-3 allows the suction pipe 72 to lengthen and shorten in the axial direction *(i.e., parallel to the first reference axis 101)* so as to follow/accompany the movements of the seat 32 caused by the pressure variation implemented *(by means of the adjustment unit indicated above)* in the annular chamber 53' defined between the two bellows 51', 52' connected to the seat 32'. From the above, it is clear that the present invention allows the intended tasks and objects to be achieved. In particular, the invention provides a high-vacuum sealing valve that is structurally different from a gate sealing valve. In particular, the valve has a relatively small footprint and is particularly versatile from an application point of view. Furthermore, the valve according to the invention is extremely effective in terms of sealing due to the use of bellows members and the annular chamber, defined therebetween, with adjustable pressure. Advantageously, the sealing valve provided with the present invention is easy to manufacture and easy to assemble.

## Claims

1. A vacuum-tight valve (1, 1'), **characterised by** comprising:
- a valve body (2, 2') comprising a first head (21, 21') and a second head (22, 22') opposite each other and a jacket (20, 20') extending between said heads (21-22, 21'-22'), wherein said valve body (2, 2') comprises an inner cavity (200, 200') inside said jacket (20, 20') and which extends between said heads (21, 22, 21', 22'), said first head (21, 21') and said second head (22, 22') comprising a first opening (211, 221') and a second opening (211, 221'), respectively, wherein, in use, said first opening (211, 211') makes said inner cavity (200, 200') communicating with a first environment and said second opening (221, 221') makes said inner cavity (200, 200') communicating with a second environment, wherein said opening (211, 211') of said first head (21, 21') identifies a first reference axis (101, 101');
- a closure member assembly housed in said valve body (2, 2') and comprising a closure member (31, 31') and a sealing seat (32, 32'), wherein said closure member (31, 31') is rotatable around a rotation axis (105, 105') with respect to said valve body (2, 2') between an opening position, for which said openings (211, 221, 211', 221') are communicating each other, and a closing position, in which said closure member (31, 31') cooperates tightly with said sealing seat (32, 32') preventing communication between said openings (211, 221, 211', 221');
- a first bellows member (51, 51') and a second bellows member (52, 52') arranged inside said cavity (200, 200') so as to define an annular chamber (53, 53') coaxial to said first reference axis (101, 101'), wherein for each of said bellows members (51, 52, 51', 52'), a first end (511, 521, 512', 521') is connected to said first head (21, 21') and a second end (512, 522, 512', 522') is connected to said sealing seat (32, 32'), wherein the pressure inside said annular chamber (53, 53') is adjustable to cause a movement of said sealing seat (32, 32');
- a guiding assembly (41-42) arranged inside said cavity (200, 200') and operatively connected to said sealing seat (32, 32') to guide said movement thereof along a direction parallel to said first reference axis (101), wherein said guiding assembly (41, 42, 41', 42') is distinct from said valve body (2, 2') and is radially arranged between said sealing seat (32, 32') and said valve body (2, 2').

2. A valve (1, 1') according to claim 1, wherein said jacket (20, 20') is cylindrical and extends longitudinally between said heads (21, 22, 21', 22') around a second reference axis (102, 102') parallel to said first reference axis (101).

3. A valve (1, 1') according to claim 2, wherein said first reference axis (101, 101') is arranged in an eccentric position with respect to said second reference axis (102, 102'), where such eccentric position is evaluated on a direction orthogonal to said rotation axis (105, 105') of said closure member (31, 31').

4. A valve (1, 1') according to any one of the preceding claims, wherein said valve (1) comprises a pressure adjustment unit (5) arranged outside said valve body (2, 2') and pneumatically connected to said annular chamber (53, 53') to adjust the internal pressure thereof.

5. A valve (1, 1') according to any one of the preceding claims, wherein said valve (1, 1') comprises a stem (45, 45') rigidly connected to said closure member (31, 31') and which exits, at least partially, outside said valve body (2, 2'), said valve (1) comprising an activation unit (6) outside said valve body (2, 2') and operatively connected to said stem (45, 45') to cause the rotation thereof around said rotation axis (105, 105').

6. A valve (1, 1') according to any one of the preceding claims, wherein said valve (1, 1') comprises a pair of support plates (81, 82, 81', 82') arranged inside said valve body (2, 2') in a diametrically opposite position with respect to said first reference axis (101, 101'), wherein said closure member (31, 31') is positioned between said plates (81, 82, 81', 82') and pivoted to each of them so as to rotate around said rotation axis (105, 105').

7. A valve (1, 1') according to any one of the preceding claims, wherein said closure member (31, 31') comprises at least one spherical sector portion (312, 312') which comprises a constant-curvature surface (312A, 312A') intended to cooperate with said sealing seat (32, 32') when said closure member (31, 31') occupies said closing position.

8. A valve (1) according to claim 7, wherein said closure member (31) comprises an open ring portion (311) which includes an outer surface (311B) and an inner surface (311A), wherein a pair of pin portions (31A, 31B) extend from said outer surface (311B) in a diametrically opposite position and wherein said pin portions (31A, 31B) identify said rotation axis (105), wherein said spherical sector portion (312) extends from said open ring portion (311), said closure member (31) comprising a pair of stiffening portions (313) which extend on opposite faces of said open ring portion (311) connecting said open ring portion (311) to said spherical sector portion (312).

9. A valve (1, 1') according to any one of the preceding claims, wherein said sealing seat (32, 32') comprises a body (320, 320') having a ring shape, wherein said body (320, 320') carries at least one sealing ring (325, 325', 325") adapted to abut against a contact surface (312A, 312A') of said closure member (31, 31') when the latter occupies said closing position.

10. A valve (1, 1') according to claim 9, wherein said body (320, 320') of said sealing seat (32, 32') comprises:
- an inner cylindrical surface (32A, 32A') to which is connected said second end (512, 512') of an innermost bellows member (51, 51') of said bellows members (51, 52, *51',* 52') and an outer cylindrical surface (32B, 32B') to which is connected said second end (522, 522') of an outermost bellows member (52, 52') of said bellows members (51, 52, 51', 52');
- a first side (32-1, 32-1') facing said first head (21, 21') and a second side (32-2, 32-2') facing said second head (22, 22').

11. A valve (1) according to claim 10, wherein:
- said sealing ring (325) of said sealing seat (32) is arranged between an innermost cylindrical surface (32C) of said body (320) and said second side (32-2) of said sealing seat (32), or wherein
- said at least one sealing ring (325) has a shape with two circular lobes (L) and is arranged on said body (320) of said sealing seat (32) so that each of said lobes (L) contacts said closure member (31) at different diameters evaluated with respect to said first reference axis (101).

12. A valve (1, 1') according to claim 10, wherein said sealing seat (32, 32') is provided with two rings (325', 325") having different diameters and arranged in corresponding seats (326', 326") defined on said second side (32-2, 32-2') of said sealing seat (32, 32'), each sealing ring (325', 325") being intended to contact with a contact surface (312, 312A') of said closure member (31, 31').

13. A valve (1, 1') according to claim 12, wherein said valve (1, 1') comprises a suction assembly (70) configured to reduce the pressure in a sealing space (AS) delimited between said second side (32-2, 32-2') of said sealing seat (32, 32'), said seats (326, 326") and said contact surface (312, 312A') of said closure member (31, 31').

14. A valve (1') according to claim 13, wherein said suction assembly (70) comprises:
- a suction channel (71) which extends inside said body (320') of said sealing seat (32') between said sealing space (AS) defined above up to an outlet section (71-O) near a surface of said body (320');
- a suction pipe (72) outside said body (320') of said sealing seat (32') and which extends in the annular space between said outermost bellows member (52') and said jacket (20') of said valve body (2'), wherein said suction pipe (72) communicates, at a first end (72A) thereof, with said outlet section (71-0) of said suction channel (71);
- suction means (AM) connected to said suction pipe (72) at a second end (72B) of said suction pipe (72) outside said valve body (2'),
wherein said suction pipe (72) comprises at least one section (72-2) integral with said first head (21') of said valve body (2) and at least one bellows section (72-3) defined between said section (72-2) integral with said first head (21') and said first end (72A) of said suction pipe (72).

15. A valve (1) according to any one of the preceding claims, wherein said guiding assembly of said sealing seat (32) comprises:
- a pair of pin elements (41) fitted on said body (320) of said sealing seat (32) in diametrically opposite positions with respect to said first reference axis (101);
- a pair of guide elements (42) integral with said valve body (2), wherein each guide element (42) comprises a straight groove (42A) which extends along a guide direction (309) parallel to said first reference axis (101),
wherein each pin element (41) comprises a first portion (411) inserted into the groove (42A) of one of said guide elements (42) and a second portion (412) which rests on a surface of the same guide element (42) so as to maintain said sealing seat (32) at a predetermined distance from said guide element (42).

16. A valve (1) according to claim 15 when dependent on claim 8, wherein each of said guide elements (42) is defined by a part of one of said support plates (81, 82) to which said closure member (6) is pivoted.
